# EUROPÄISCHE PATENTSCHRIFT

(11) **EP 0 803 411 B1**
(45) Veröffentlichungstag und Bekanntmachung des Hinweises auf die Patenterteilung: **16.05.2001**
(21) Anmeldenummer: 97250024.3
(22) Anmeldetag: 04.02.1997
(51) Int. Cl.: B60R 21/16

(54) **Gassack, insbesondere für ein Seitenairbagmodul**
Air bag,in particular for a side air bag module
Coussin gonflable, en particulier pour un module de sac gonflable latéral

(30) Priorität: 24.04.1996 DE 29608055 U
(43) Veröffentlichungstag der Anmeldung: 29.10.1997
(73) Patentinhaber: Petri AG, 63743 Aschaffenburg (DE); DaimlerChrysler AG, 70567 Stuttgart (DE)
(72) Erfinder: Reh, Stefan, Dipl.-Ing., 63939 Wörth (DE); Müller, Norbert, Dipl.-Ing., 63743 Aschaffenburg (DE); Tschäschke, Ulrich, Dipl.-Ing., 71139 Ehningen (DE); Holzapfel, Bernhard, Dipl.-Ing., 73630 Remshalden (DE)
(74) Vertreter: Bärmann, Klaus, Dipl.-Ing.

(56) Entgegenhaltungen:
- EP-A- 0 600 598
- DE-C- 4 430 412
- DE-U- 29 517 372
- FR-A- 2 227 979
- JP-A- 7 329 667
- US-A- 5 160 164
- US-A- 5 464 250
- US-A- 5 586 782

## Beschreibung

Die Erfindung betrifft einen Gassack, insbesondere für ein Seitenairbagmodul, nach dem Oberbegriff des Anspruchs 1.

Aus der DE 44 30 412 C1 ist eine Seitenaufprallschutzeinrichtung für einen Insassen eines Fahrzeuges mit einem mit einer Fülleinrichtung zusammenwirkenden aufblasbaren Gaskissen bekannt. Innerhalb des Gaskissens sind bei dieser Einrichtung Fangbänder vorgesehen, die das Gaskissen zumindest in zwei Kammern unterteilen, d.h. zwischen zwei Kammern sind mehrere nebeneinander liegende Fangbänder vorhanden. Zwischen zwei benachbarten Fangbändern sind entweder offene Spalte vorgesehen oder die Fangbänder sind durch Reißnähte miteinander verbunden. Diese reißen beim Füllen des Gassackes auf, so daß zwischen den benachbarten Fangbändern ebenfalls ein Spalt entsteht.

Diese Art der Trennung zweier Kammern des Gassackes untereinander ist aufwendig, da zwischen beiden Kammern mehrere Fangbänder im Gassack zu befestigen sind.

Aus der US 5 464 250 ist ein Airbag bekannt, bei dem ein Fangband zick-zack-förmig durch den Airbag verläuft. Dabei ist das Fangband abwechselnd an der Ober- und Unterseite des Airbags befestigt, so daß mehrere Kammern gebildet werden. Jeder Fangbandabschnitt weist Öffnungen auf, über die die Kammern miteinander verbunden sind. Weiterhin verlaufen die zwischen der Ober- und Unterseite zick-zack-förmig verlaufenden Seitenkanten des Fangbandes frei im Gassack.

Diese Art der Anordnung eines Fangbandes weist den Nachteil auf, daß die Größe und Form der Kammern nur in begrenztem Umfang durch Änderung des Neigungswinkels der Fangbandabschnitte zwischen der Ober- und Unterseite des Airbags veränderbar sind.

Weiterhin ist aus der DE 44 43 027 A1 ein Gassack bekannt, der durch eine flexible Trennwand im Inneren des Gassackes in zwei Kammern aufgeteilt ist. Die Trennwand erstreckt sich über die gesamte Länge oder Breite und Tiefe des Gassackes und sie weist eine Öffnung für die Verbindung der beiden Kammern auf. Die Trennwand verläuft im aufgeblasenen Zustand geradlinig.

Bei beiden besteht der Nachteil, daß das Fangband zusätzliche Öffnungen für die Verbindung der Kammern aufweist.

Aus der FR 2 227 979 A1 ist ein Gassack für ein Seitenairbagmodul gemäß dem Oberbegriff des Anspruchs 1 bekannt, der eine Mehrzahl longitudinal voneinander beabstandeter, vertikal verlaufender Fangbänder aufweist, die den Gassack in unterschiedliche Kammern unterteilen, wobei die am Gassack befestigten längeren Seitenkanten der Fangbänder im aufgeblasenen Zustand des Gassackes teilweise einen gekrümmten Verlauf aufweisen und die schmalen Enden der Fangbänder im Abstand zum Gassack verlaufen.

In der JP 7-329667 A ist ein Gassack dargestellt, der eine Mehrzahl in unterschiedlicher Richtung verlaufender Fangbänder aufweist, die den Gassack in verschiedene Bereiche unterteilen.

Aus der US-PS 5,586,782 ist ein Gassack für ein Seitenairbagmodul bekannt, der ein zur Vertikalen leicht geneigt verlaufendes Fangband aufweist, das den Gassack in zwei Kammern unterteilt, wobei die an gegenüberliegenden Flächen des Gassackes befestigten Seitenkanten des Fangbandes im aufgeblasenen Zustand des Gassackes trapezförmig verlaufen und ein schmales Ende des Fangbandes im Abstand zum Gassack angeordnet ist. Die beiden Kammern des Gassackes weisen unterschiedliche Volumina auf, so daß sie nach dem Aufblasen des Gassackes mit unterschiedlichen Innendrücken für einen aufprallenden Insassen bereit gehalten werden.

In der DE 295 173 72 U1 ist ein Gassack für eine Seitenaufprall-Schutzeinrichtung beschrieben, der durch einen in Längsrichtung verlaufenden Abnäher in unterschiedliche Bereiche unterteilt ist. Zusätzlich dient ein vertikal verlaufendes Fangband zur Stabilisierung eines für den Kopfschutz vorgesehenen Abschnitt des Gassackes relativ zu einem für den Thoraxschutz vorgesehenen Abschnitt.

Der Erfindung liegt die Aufgabe zugrunde, einen Gassack der eingangs genannten Art weiter zu verbessern.

Diese Aufgabe wird erfindungsgemäß durch die Schaffung eines Gassackes mit den Merkmalen des Patentanspruchs 1 gelöst.

Danach ist bei einem Gassack mit den Merkmalen des Oberbegriffs des Patentanspruchs 1 weiterhin vorgesehen, daß das mindestens eine zur Unterteilung des Gassackes in verschiedene Kammern vorgesehene Fangband bei Anordnung des Gassackes in einer Kraftfahrzeugtür in Fahrzeuglängsrichtung verläuft und daß dessen beide am Gassack befestigte Seitenkanten derart in unterschiedlichen Richtungen verlaufen, daß die Ausdehnung des aufgeblasenen Gassackes quer zur Türebene zwischen den Enden des Fangbandes variiert und dadurch entlang der Fahrzeuglängsrichtung an den für den Gassack neben einem Fahrzeugsitz zur Verfügung stehenden Raum anpaßbar ist.

Durch den erfindungsgemäß vorgesehenen Verlauf der Seitenkanten des Fangbandes läßt sich der Gassack in einfacher Weise in Kammern unterschiedlicher Größe und Form unterteilen und weiterhin ist dadurch die Form des aufgeblasenen Gassacks beeinflußbar. Weiterhin wurde gefunden, daß zwischen benachbarten Kammern keine Öffnungen im Fangband oder nicht mehrere Fangbänder vorhanden sein müssen, zwischen denen beim Aufblasen des Gassackes Spalte vorhanden sind, um zwar ein verzögertes aber doch schnelles Füllen der zweiten Kammer zu ermöglichen. Vielmehr ist ein zufriedenstellendes Füllen der zweiten Kammer auch bei Anordnung nur eines Fangbandes als Kammerwand möglich, das nur an den schmalen Endkanten umströmt werden kann. Ein Fangband läßt sich zwischen zwei Kammern leichter im Gassack befestigen als mehrere Fangbänder, die zueinander ausgerichtet werden müssen.

Durch die Änderung des Abstandes zwischen den Fangbandenden und dem Gasssackrand und damit des Querschnitts der Verbindungsöffnungen zwischen den Kammern kann die gewünschte Verzögerungszeit mit der die zweite Kammer gegenüber einer ersten Kammer aufgeblasen wird, die an eine Fülleinrichtung angeschlossen ist, beeinflußt werden.

Dadurch daß das in Längsrichtung des Fahrzeugs verlaufende Fangband derart ausgebildet ist, daß die Ausdehnung des aufgeblasenen Gassackes (Breite des Gassackes) quer zur Türebene entlang der Fahrzeuglängsrichtung variiert, kann die Breite des Gassackes ohne weiteres an das konstruktive Umfeld neben einem Fahrzeugsitz angepaßt werden.

Es ist zweckmäßig, daß das Fangband an seinen schmalen Enden bogenförmig verläuft, um eine erhöhte Stabilität der Enden zu erzielen und um die Form der Kammer zu beeinflussen. Weiterhin sollten die längeren Seitenkanten des Fangbandes durchgehend am Gassack befestigt sein.

In einer Ausführungform unterteilt das Fangband den Gassack in zwei Kammern, von denen die erste an die Fülleinrichtung angeschlossen ist und das Fangband verläuft an seinen schmalen Enden in Richtung der zweiten Kammer bogenförmig.

Eine Beeinflussung der Form und Größe benachbarter Kammern ist auch dadurch möglich, daß die am Gassack befestigten längeren Seitenkanten des Fangbandes insgesamt kurvenförmig verlaufen.

Bei Anordnung von mehr als zwei Kammern können für deren Unterteilung ein Fangband oder mehrere Fangbänder vorgesehen sein. Die Verwendung mehrerer Fangbänder für die Unterteilung unterschiedlicher Kammern ist nicht vergleichbar mit der Anordnung mehrerer Fangbänder zwischen zwei Kammern in dem oben genannten bekannten Gassack. Vielmehr ist auch in diesem Fall zwischen zwei benachbarten Kammern jeweils nur ein Fangband vorgesehen.

Zur Bildung von mehr als zwei Kammern ist in einer Ausführungsform vorgesehen, daß die am Gassack befestigten längeren Seitenkanten des Fangbandes V-förmig verlaufen. In diesem Fall werden im Gassack drei Kammern gebildet, die nacheinander aufgeblasen werden. Eine noch weitergehende Unterteilung des Gassackes ist durch einen zickzackförmigen Verlauf der am Gassack befestigten längeren Seitenkanten des Fangbandes möglich.

Eine Beeinflussung der Form des aufgeblasenen Gassackes erfolgt auch dadurch, daß die Seitenkanten des Fangbandes in unterschiedliche Richtungen verlaufen. Während bei einem parallelen Verlauf der Seitenkanten auch die angrenzenden Seiten des Gassackes nach dessen Entfaltung parallel verlaufen, ist das insbesondere bei Seitenairbags nicht immer zweckmäßig. Besonders dort ist der Gassack an das konstruktive Umfeld anzupassen, z.B. an den Raum zwischen dem Sitz und der B-Säule.

So ist in einer Ausführungform vorgesehen, daß das Fangband trapezförmig ist. Dadurch wird erreicht, daß der Gassack im entfalteten Zustand eine unterschiedliche Dicke aufweist, die sich zwischen den Enden des Fangbandes kontinuierlich verändert und dem verfügbaren Raum anpaßbar ist.

In einer weiteren Ausgestaltung dieser Ausführungsform ist vorgesehen, daß das Fangband die Form eines Doppeltrapezes aufweist, wobei beide Trapeze eine der parallelen Seiten als gemeinsame Seite haben. In dieser Ausführungsform nimmt die Dicke des entfalteten Gassackes von der gemeinsamen Seite aus zu den Enden des Fangbandes kontinuierlich zu oder ab, je nachdem ob das Doppeltrapez in der Mitte breiter oder schmaler als an den Enden ist.

In einer anderen Ausführungsform ist vorgesehen, daß das Fangband Abschnitte unterschiedlicher Form aufweist und/ oder die Fangbänder im Bereich unterschiedlicher Kammern unterschiedliche Formen aufweisen. Damit ist es möglich, den Gassack im aufgeblasenen Zustand noch besser an die unterschiedlichsten Raumverhältnisse anzupassen.

In einer bevorzugten Ausführungsform besteht der Gassack aus einem plattenförmigen Unter- und Oberteil, zwischen denen sich das Fangband erstreckt bzw. die Fangbänder erstrecken und an denen sie befestigt sind.

Die Erfindung soll in Ausführungsbeispielen anhand von Zeichnungen erläutert werden, wobei in den Figuren 7-12 die Erfindung dargestellt ist. Es zeigen:
- Fig. 1: eine Ansicht auf die Unterseite eines ausgebreiteten Gassackes, teilweise geschnitten;
- Fig. 2: einen Schnitt gemäß der Linie II - II der Fig. 1:
- Fig. 3: einen Schnitt gemäß der Linie III - III der Fig. 1;
- Fig. 4 - 6: Ansichten der Unterseite eines ausgebreiteten Gassackes mit unterschiedlich verlaufendem Fangband, teilweise geschnitten;
- Fig. 7: die Draufsicht auf einen Fahrersitz mit entfaltetem Gassack;
- Fig. 8a: einen Längsschnitt durch einen ausgebreitetem Gassack mit trapezförmigem Fangband;
- Fig. 8b: eine Seitenansicht des Fangbandes nach Fig. 8a;
- Fig. 8c, d: Querschnitte gemäß den Buchstaben A und B der Fig. 8a;
- Fig. 9a: einen Längsschnitt durch einen ausgebreiteten Gassack mit einem Fangband, das die Form eines Doppeltrapezes mit der längeren der parallelen Seiten als gemeinsame Seite aufweist;
- Fig. 9b: eine Seitenansicht des Fangbandes nach Fig. 9a;
- Fig. 9c, d: Querschnitte gemäß den Buchstaben A, B und C der Fig. 9a;
- Fig. 10a: einen Längsschnitt durch einen ausgebreiteten Gassack mit einem Fangband, das die Form eines Doppeltrapezes mit der kürzeren der parallelen Seiten als gemeinsame Seite aufweist;
- Fig. 10b: eine Seitenansicht des Fangbandes nach Fig. 10a;
- Fig. 10c, d: Querschnitte gemäß den Buchstaben A, B und C der Fig. 10a;
- Fig. 11a - e: eine abgewandelte Ausführungsform der Figuren 10a - d, wobei die Trapeze eine unterschiedliche Form aufweisen;
- Fig. 12a: einen Längssschnitt durch einen ausgebreiteten Gassack mit zwei Fangbändern unterschiedlicher Form;
- Fig. 12b, c: Seitenansichten der Fangbänder nach Fig. 12a;
- Fig. 12d, e: Querschnitte gemäß den Buchstaben A, B und C der Fig. 12a.

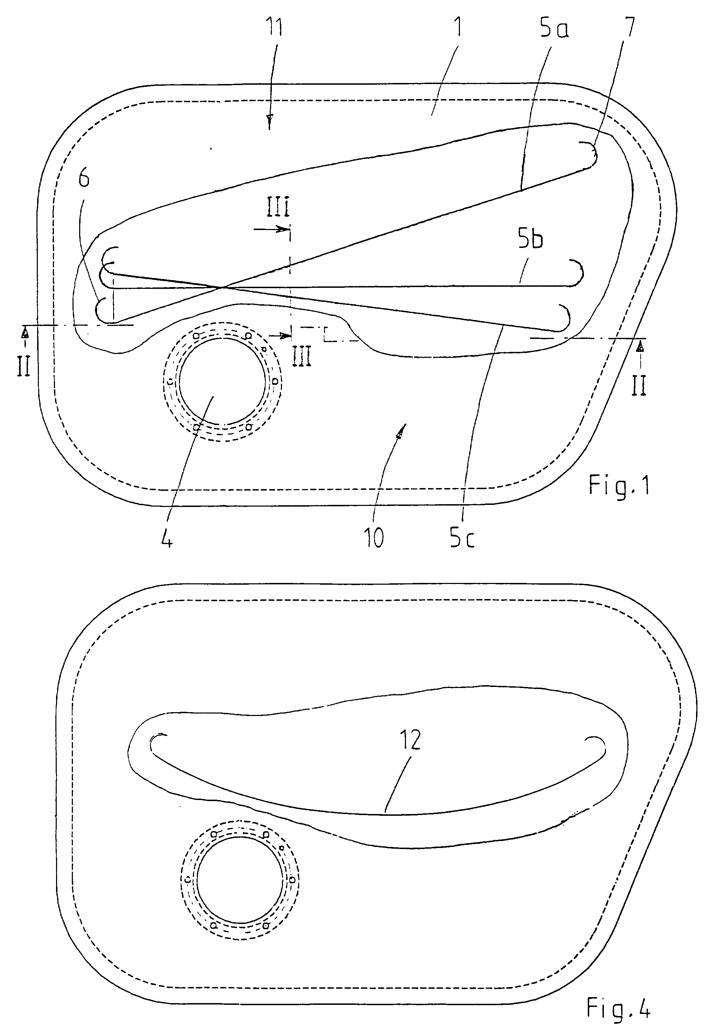

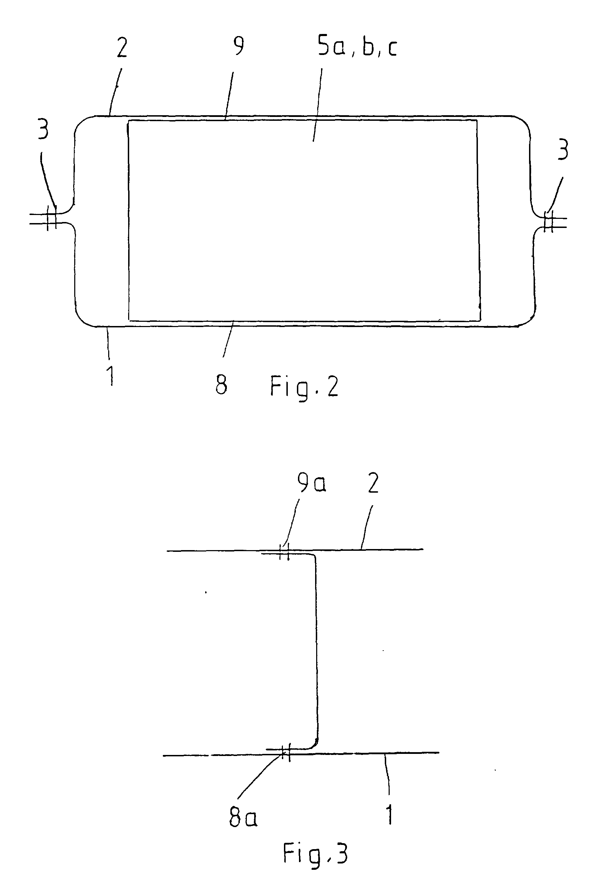

Der Gassack nach den Figuren 1 bis 3 besteht aus einem Unterteil 1 und einem Oberteil 2, die am Rand durch Nähte 3 miteinander verbunden sind. Das Unterteil ist mit einem Einblasmund 4 versehen, der an einen nicht dargestellten Gasgenerator angeschlossen wird. Zwischen dem Unterteil und dem Oberteil erstreckt sich quer durch den Gassack ein Fangband 5a, 5b oder 5c. Das Fangband verläuft geradlinig und weist bogenförmige Enden 6, 7 auf. Das Fangband ist an seinen Längsseiten 8, 9 durch Nähte 8a, 9a mit dem Unterteil bzw. Oberteil verbunden. Das Annähen des durchgehenden Fangbandes ist einfacher, als das Annähen mehrerer nebeneinander liegender einzelner Fangbänder zwischen zwei benachbarten Kammern. Auch andere Befestigungsarten, wie z.B. Kleben sind einfacher realisierbar.

Das Fangband teilt den Gassack in zwei Kammern 10, 11, die an beiden Enden des Fangbandes miteinander verbunden sind, da sich das Fangband nicht bis an den Rand des Gassackes erstreckt. Durch diese Unterteilung wird erreicht, daß der Gassack im Bereich der Kammer 10 mit dem Einblasmund 4 zuerst aufgeblasen wird, und daß er im Bereich der Kammer 11 verzögert aufgeblasen wird.

Das Aufblasen des Gassackes kann durch das Größenverhältnis der Kammern zueinander beeinflußt werden. Dieses Größenverhältnis kann durch eine in der Fig. 1 dargestellte unterschiedliche Lage des Fangbandes beeeinlußt werden. Durch die dargestellte unterschiedliche Winkellage der Fangbänder 5a, 5b und 5c wird nicht nur das Größenverhältnis der Kammern verändert, sondern jede einzelne Kammer wird auch in ihrer Form verändert. So ist die Kammer 10 bei Anordnung des Fangbandes 5a in ihrem rechten Bereich größer als im linken Bereich, während diese Bereiche mit einem Fangband 5b gleich groß sind. Mit einem Fangband 5c ist dagegen der linke Bereich der Kammer 10 größer als der rechte Bereich. Die Form der Kammer 11 verändert sich entsprechend im entgegengesetzten Sinn, d.h., vergrößerten Bereichen der Kammer 10 stehen verkleinerte Bereiche der Kammer 11 gegenüber.

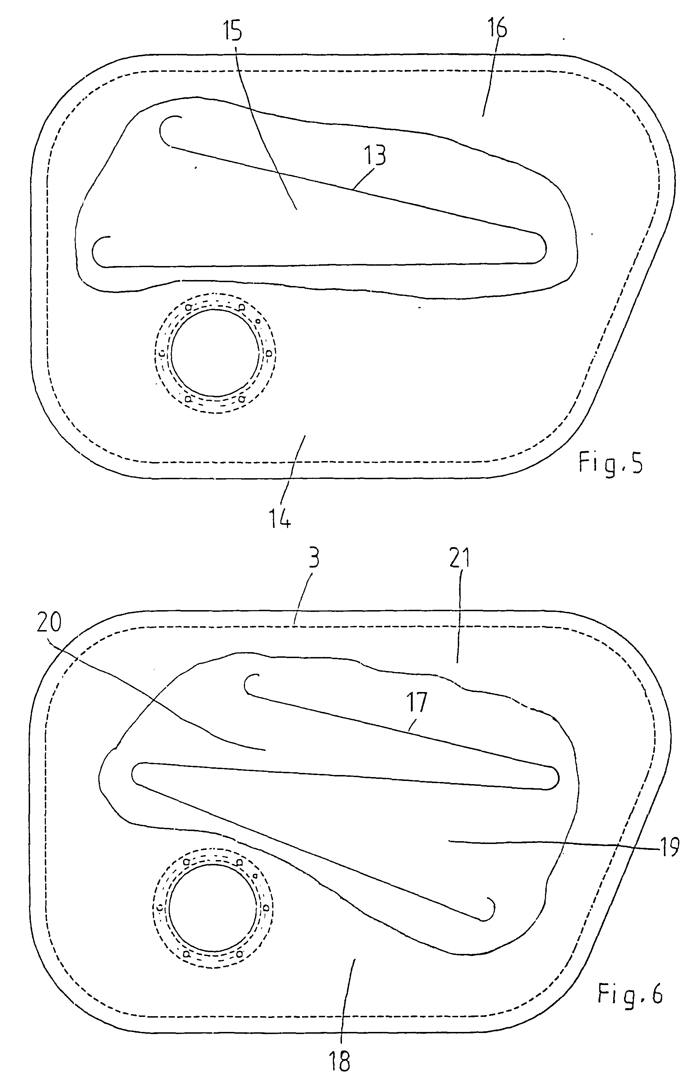

Eine weitere Möglichkeit zur Beeinflussung des Größenverhältnisses der Kammern ist in der Fig. 4 dargestellt. Dort ist ein Fangband 12 vorgesehen, daß kurvenförmig verläuft. Dadurch kann erreicht werden, daß der mittlere Bereich der Kammern eine andere Größe aufweist als die seitlichen Bereiche in der Nähe der Fangbandenden.

Während bei den bisher dargestellten Ausführungsformen der Gassack durch das Fangband in zwei Kammern unterteilt wurde, ist in der Fig. 5 eine Ausführungsform dargestellt, bei der das Fangband den Gassack in drei Kammern unterteilt. Hierzu ist ein V-förmig verlaufendes Fangband 13 vorgesehen, das den Gassack in drei Kammern 14, 15, 16 unterteilt. Durch die Dreiteilung des Gassackes ist eine feinere Abstufung des verzögerten Aufblasens bestimmter Bereiche des Gassackes zu erzielen.

Durch ein zickzackförmig verlaufendes Fangband 17, wie es in Fig. 6 dargestellt ist, kann eine noch weitergehende Unterteilung erfolgen. In der dargestellten Ausführungsform sind vier Kammern 18 bis 21 vorhanden.

Aus den Ausführungsbeispielen ist ersichtlich, daß mit nur einem Fangband eine Unterteilung eines Gassackes in verschiedene Kammern möglich ist.

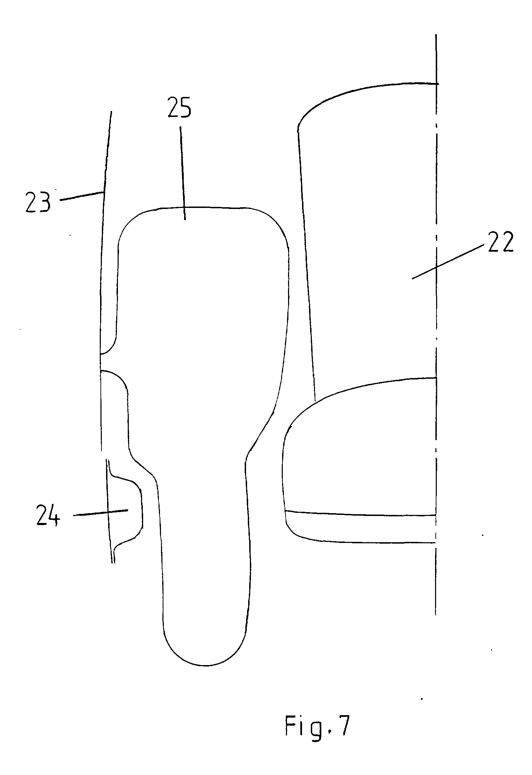

Aus der Fig.7 ist am Beispiel eines Gassacks für einen Fahrersitz erkennbar, wie sich der Gassack an das konstuktive Umfeld anpassen muß. Aus der Figur sind ein Fahrersitz 22, eine Tür 23 und die B-Säule 24 eines Kraftfahrzeuges erkennbar. Weiterhin ist ein aufgeblasener Gassack 25 erkennbar, der sich aus der Tür heraus erstreckt. Aus der Figur ist ersichtlich, daß der Gassack im Türbereich eine größere Breite aufweist als zwischen der B-Säule und dem Sitz. Diese und andere Formen des Gassackes sind mit den als Trennwände vorgesehenen Fangbändern der nachfolgenden Ausführungsbeispiele erzielbar.

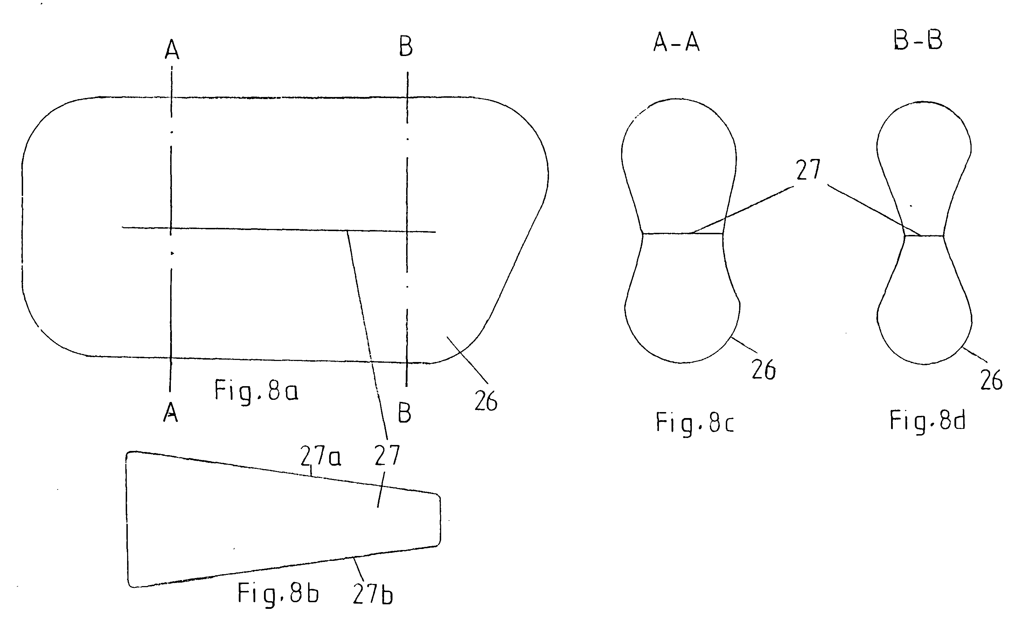

Im Ausführungsbeipiel der Figuren 8a bis d ist ein Gassack 26 dargestellt, in dem ein Fangband 27 vorgesehen ist. Dieses weist eine Trapezform auf, d.h., die Seitenkanten 27a und 27b verlaufen in unterschiedlichen Richtungen, wie es aus Fig. 8b ersichtlich ist. In dieser Form wird das Fangband zugeschnitten. Infolge dieses Verlaufs des Fangbandes weist der Gassack im entfalteten Zustand an der Schnittstelle A eine größere Breite auf als an der Schnittstelle B, wie es aus den Figuren 8c und 8d erkennbar ist.

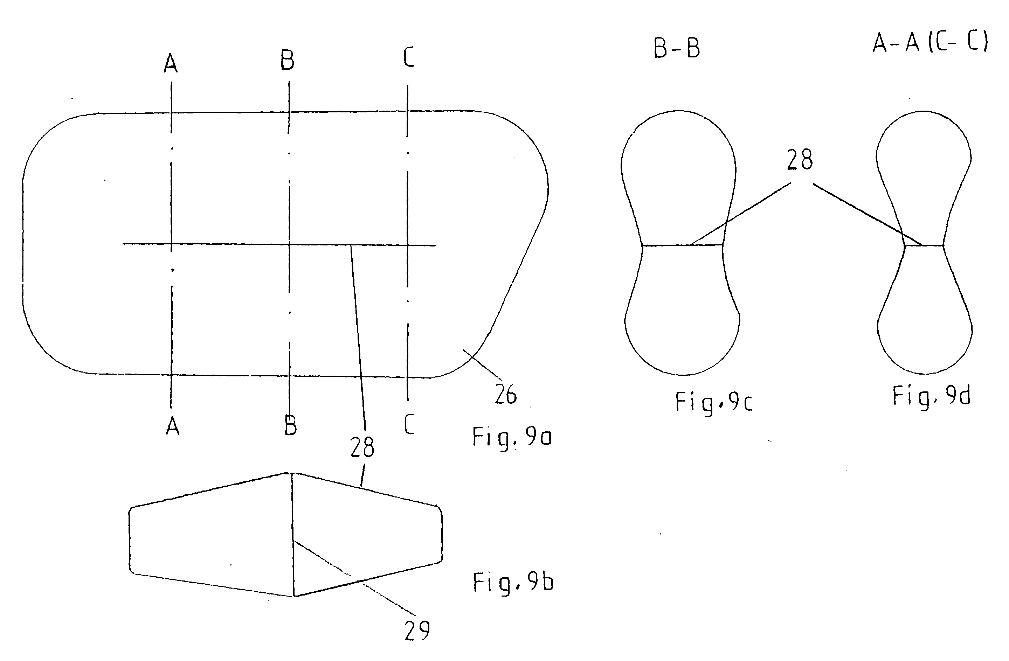

Im Ausführungsbeispiel der Figuren 9a bis d ist ein Gassack 26 mit einem Fangband 28 vorgesehen, das die Form eines Doppeltrapezes aufweist. Die beiden Trapeze weisen als gemeinsame Seite die größere Seite 29 der parallelen Seiten auf. Dadurch wird das Fangband von der Mitte aus nach seinen Enden zu schmaler. Deshalb weist der Gassack im entfalteten Zustand an der Schnittstelle B eine größere Breite auf als an den Schnittstellen A und C, wie es aus den Figuren 9c und 9d ersichtlich ist.

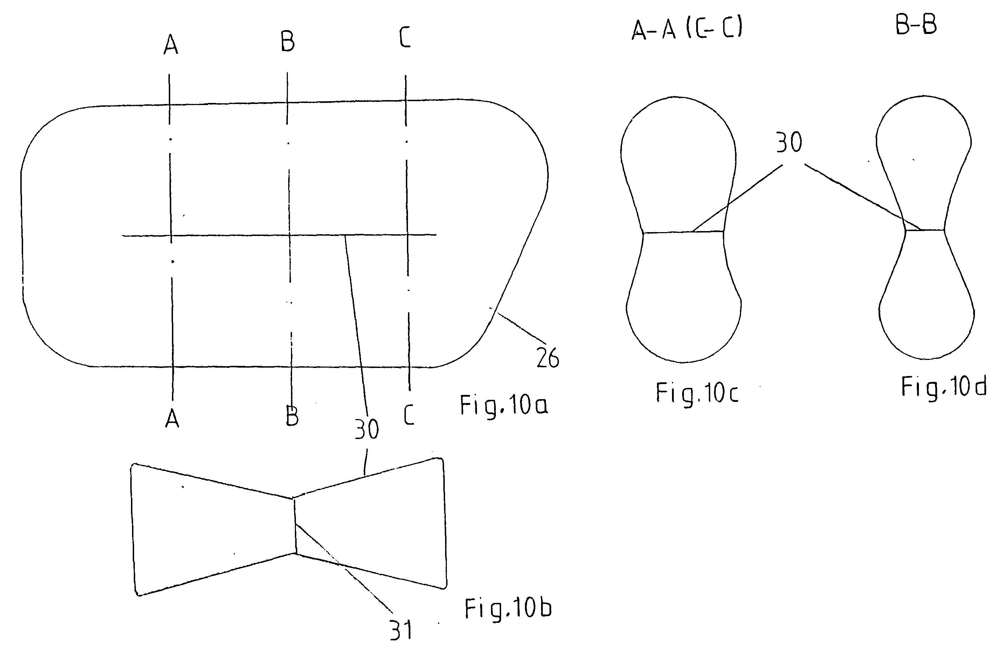

Die Figuren 10a bis 10d zeigen ein Ausführungsbeispiel, bei dem das Fangband 30 ebenfalls die Form eines Doppeltrapezes aufweist. Der Unterschied zum Ausführungsbeispiel der Figuren 9a bis 9d besteht darin, daß die kleinere Seite 31 der parallelen Seiten als gemeinsame Seite vorgesehen ist. Dadurch wird das Fangband von der Mitte aus nach seinen Enden zu breiter. Der Gassack weist deshalb im entfalteten Zustand an der Schnittstelle B eine geringere Breite auf als an den Stellen A und C, wie es aus den Figuren 10c und 10d hervorgeht.

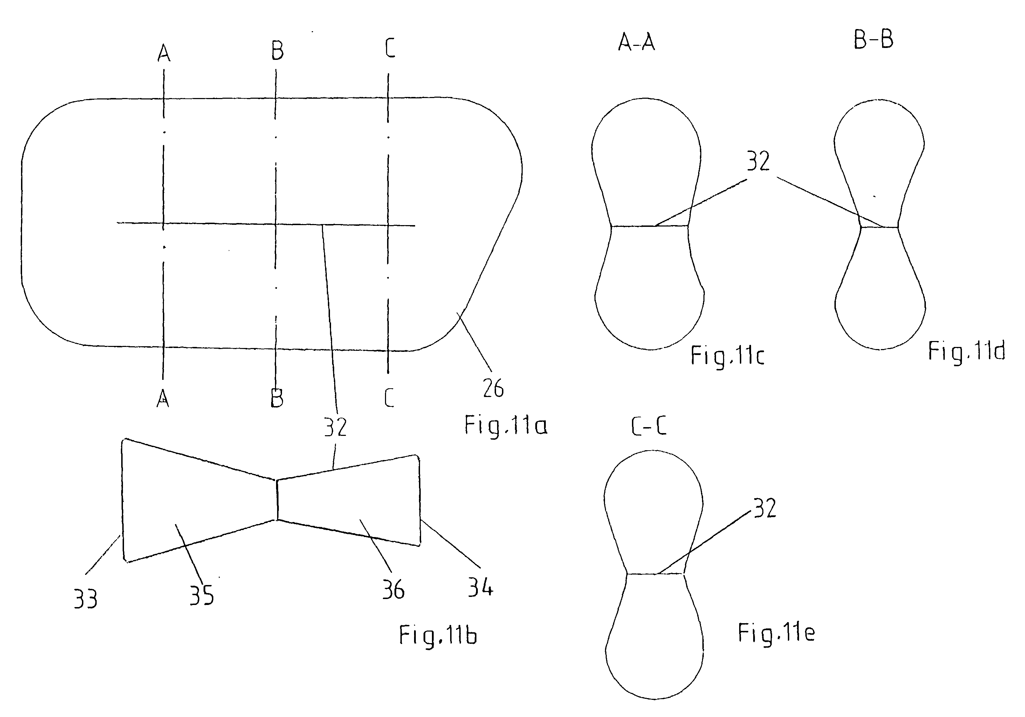

Die weitere Ausgestaltung des Ausführungsbeispiels nach den Figuren 10a bis 10d sieht in den Figuren 11a bis 11e vor, daß ein doppeltrapezförmiges Fangband 32 unterschiedlich breite Enden 33, 34 aufweist, so daß das Fangband unterschiedlich geformte Abschnitte 35, 36 hat. Dadurch wird erreicht, daß der Gassack im entfalteten Zustand an den Schnittstellen A und C eine unterschiedliche Breite aufweist, wie es aus den Figuren 11c und 11e ersichtlich ist.

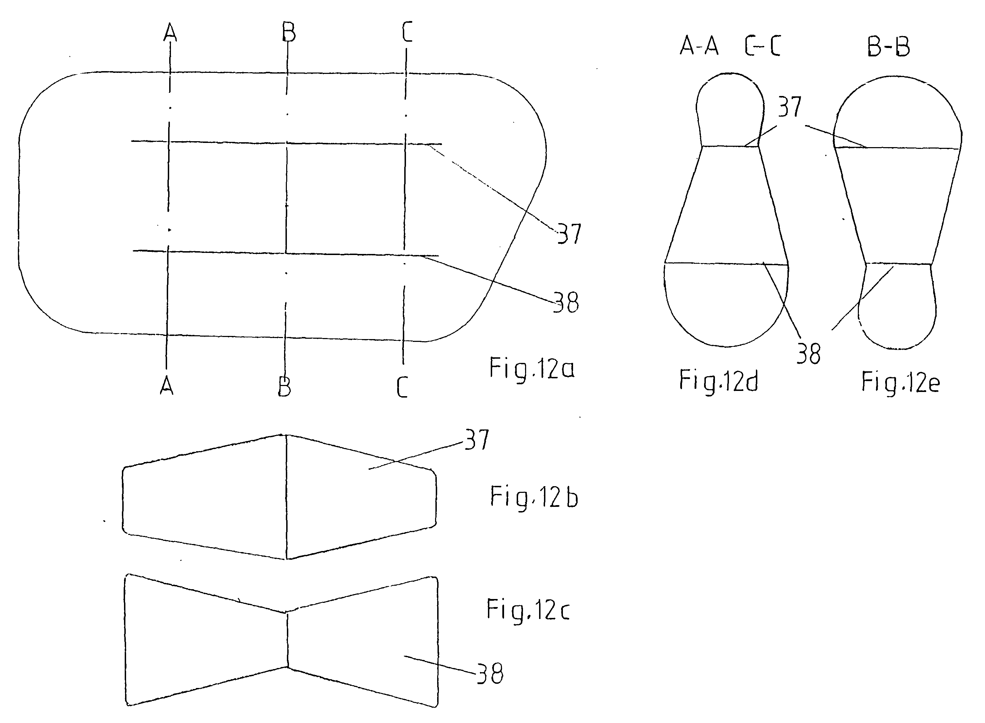

In den Figuren 12a bis 12e ist schließlich ein Ausführungsbeispiel mit zwei Fangbändern 37, 38 dargestellt, die unterschiedliche Formen aufweisen. Dabei entspricht das Fangband 37 dem Fangband 28 der Fig. 9b und das Fangband 38 dem Fangband 30 der Fig. 10b. Wie aus den Figuren 12d und 12e ersichtlich ist, weist der entfaltete Gassack sowohl in der Mitte als auch an den Enden einen unterschiedlichen Verlauf auf.

Die dargestellten Ausführungsformen zeigen beispielhaft die Möglichkeiten zur Beeinflussung der Gassackgeometrie durch die erfindungsgemäßen Fangbänder. Es ist erkennbar, daß beliebige andere Formen der Fangbänder möglich sind.

## Patentansprüche

1. Gassack für ein Seitenairbagmodul eines Fahrzeugs, der mittels einer Fülleinrichtung aufblasbar ist und der aus mindestens zwei miteinander verbundenen Kammern besteht, wobei
a) zwischen jeweils zwei Kammern als Wand ein Fangband (27, 28, 30, 32) vorgesehen ist, das mit je einer der längeren Seitenkanten (27a, 27b) an gegenüberliegenden Flächen des Gassacks (25, 26) befestigt ist,
b) die am Gassack (25, 26) befestigten Seitenkanten (27a, 27b) des Fangbandes (27, 28, 30, 32) im aufgeblasenen Zustand des Gassackes (25, 26) mindestens teilweise einen von einer Geraden abweichenden Verlauf haben und/oder in unterschiedliche Richtungen verlaufen und
c) die schmalen Enden (33, 34) des Fangbandes (27, 28, 30, 32) im Abstand zum Gassack (25, 26) verlaufen,
**dadurch gekennzeichnet,**
daß das Fangband (27, 28, 30, 32) bei Anordnung des Gassackes (25, 26) in einer Tür (23) des Fahrzeugs in Fahrzeuglängsrichtung verläuft und daß dessen beide am Gassack befestigte Seitenkanten (27a, 27b) derart in unterschiedliche Richtungen verlaufen, daß die Ausdehnung des aufgeblasenen Gassackes (25, 26) quer zur Türebene zwischen den Enden des Fangbandes (27, 28, 30, 32) variiert und dadurch entlang der Fahrzeuglängsrichtung an den für den Gassack (25, 26) neben einem Fahrzeugsitz (22) zu Verfügung stehenden Raum angepaßt ist.

2. Gassack nach Anspruch 1, **dadurch gekennzeichnet,** daß das Fangband an seinen schmalen Enden (6, 7) bogenförmig verläuft.

3. Gassack nach Anspruch 1 oder 2, **dadurch gekennzeichnet,** daß die längeren Seitenkanten (8, 9) des Fangbandes durchgehend am Gassack befestigt sind.

4. Gassack nach mindestens einem der vorhergehenden Ansprüche, **dadurch gekennzeichnet,** daß das Fangband den Gassack in zwei Kammern (10, 11) unterteilt, von denen die erste (10) an die Fülleinrichtung angeschlossen ist, und daß das Fangband (5a, 5b, 5c) an seinen schmalen Enden (6, 7) in Richtung der zweiten Kammer (11) bogenförmig verläuft.

5. Gassack nach mindestens einem der vorhergehenden Ansprüche, **dadurch gekennzeichnet,** daß die am Gassack befestigten längeren Seitenkanten des Fangbandes (12) insgesamt kurvenförmig verlaufen.

6. Gassack nach mindestens einem der vorhergehenden Ansprüche, **dadurch gekennzeichnet,** daß bei Anordnung von mehr als zwei Kammern für deren Unterteilung ein Fangband (13, 17) oder mehrere Fangbänder (37, 38) vorgesehen sind.

7. Gassack nach mindestens einem der vorhergehenden Ansprüche, **dadurch gekennzeichnet,** daß die am Gassack befestigten längeren Seitenkanten des Fangbandes (13) V-förmig verlaufen und der Gassack durch das Fangband in drei Kammern (14, 15, 16) unterteilt ist.

8. Gassack nach mindestens einem der vorhergehenden Ansprüche, **dadurch gekennzeichnet,** daß die am Gassack befestigten längeren Seitenkanten des Fangbandes (17) zickzackförmig verlaufen.

9. Gassack nach mindestens einem der vorhergehenden Ansprüche, **dadurch gekennzeichnet,** daß das Fangband (27) trapezförmig ist und daß die nicht parallelen Seiten (27a, 27b) des Trapezes mit dem Gassack verbunden sind.

10. Gassack nach mindestens einem der vorhergehenden Ansprüche, **dadurch gekennzeichnet,** daß das Fangband (28, 30, 32 ) die Form eines Doppeltrapezes aufweist, wobei beide Trapeze eine der parallelen Seiten als gemeinsame Seite (29, 31) haben und die nicht parallelen Seiten des Trapezes mit dem Gassack verbunden sind.

11. Gassack nach mindestens einem der vorhergehenden Ansprüche, **dadurch gekennzeichnet,** daß der Gassack aus je einem plattenförmigen Unterteil (1) und Oberteil (2) besteht, zwischen denen sich das Fangband (5a, 5b, 5c, 1, 13, 17) erstreckt und an denen es befestigt ist.

12. Gassack nach mindestens einem der vorhergehenden Ansprüche, **dadurch gekennzeichnet,** daß das Fangband (32) Abschnitte (35, 36) unterschiedlicher Form aufweist und/oder die Fangbänder (37, 38) im Bereich unterschiedlicher Kammern unterschiedliche Formen aufweisen.

## Claims

1. Air bag for a side air-bag module of a vehicle, which can be inflated by means of a filling device and which consists of at least two chambers which are connected to one another,
a) a limiting strap (27, 28, 30, 32) being provided as a wall between two chambers in each case, the said limiting strap being fastened by each of the longer side edges (27a, 27b) to opposite surfaces of the air bag (25, 26),
b) when the air bag (25, 26) is inflated the side edges (27a, 27b) of the limiting strap (27, 28, 30, 32) which are fastened to the air bag (25, 26) at least partially have a profile which deviates from a straight line and/or run in different directions, and
c) the narrow edges (33, 34) of the limiting strap (27, 28, 30, 32) run at a distance from the air bag (25, 26),
characterized in that when the air bag (25, 26) is arranged in a door (23) of the vehicle, the limiting strap (27, 28, 30, 32) runs in the longidutinal direction of the vehicle, and in that its two side edges (27a, 27b) which are fastened to the air bag run in different directions in such a manner that the expansion of the inflated air bag (25, 26) transversely with respect to the door plane varies between the ends of the limiting strap (27, 28, 30, 32) and as a result is adapted along the longitudinal direction of the vehicle to the space available next to a vehicle seat (22) for the air bag (25, 26).

2. Air bag according to Claim 1, characterized in that the limiting strap is bent at its narrow ends (6, 7) .

3. Air bag according to Claim 1 or 2, characterized in that the longer side edges (8, 9) of the limiting strap are fastened continuously to the air bag.

4. Air bag according to at least one of the preceding claims, characterized in that the limiting strap divides the air bag into two chambers (10, 11), the first (10) of which is connected to the filling device, and in that the limiting strap (5a, 5b, 5c) is bent at its narrow ends (6, 7) towards the second chamber (11).

5. Air bag according to at least one of the preceding claims, characterized in that the longer side edges of the limiting strap (12) which are fastened to the air bag are curved in their entirety.

6. Air bag according to at least one of the preceding claims, characterized in that if more than two chambers are provided, one limiting strap (13, 17) or a plurality of limiting straps (37, 38) are provided for the division of the said chambers.

7. Air bag according to at least one of the preceding claims, characterized in that the longer side edges of the limiting strap (13) which are fastened to the air bag are V-shaped, and the air bag is divided by the limiting strap into three chambers (14, 15, 16).

8. Air bag according to at least one of the preceding claims, characterized in that the longer side edges of the limiting strap (17) which are fastened to the air bag have a zig-zag profile.

9. Air bag according to at least one of the preceding claims, characterized in that the limiting strap (27) is trapezoidal, and in that both sides (27a, 27b) of the trapezium which are not parallel are connected to the air bag.

10. Air bag according to at least one of the preceding claims, characterized in that the limiting strap (28, 30, 32) is in the form of a double trapezium, the two trapezia having one of the parallel sides as a common side (29, 31) and those sides of the trapezium which are not parallel are connected to the air bag.

11. Air bag according to at least one of the preceding claims, characterized in that the air bag consists in each case of a plate-shaped lower part (1) and upper part (2) between which the limiting strap (5a, 5b, 5c, 1, 13, 17) extends and to which it is fastened.

12. Air bag according to at least one of the preceding claims, characterized in that the limiting strap (32) has sections (35, 36) of different shape, and/or the limiting straps (37, 38) have different shapes in the region of different chambers.

## Revendications

1. Sac à gaz pour un module d'airbag latéral d'un véhicule automobile, qui peut être gonflé à l'aide d'un dispositif de remplissage et est constitué par au moins deux chambres reliées entre elles, et dans lequel
a) entre deux chambres respectives il est prévu, en tant que paroi, une bande de séparation (27, 28, 30, 32), qui est fixée par respectivement l'un des grands bords latéraux (27a, 27b) à des surfaces opposées du sac à gaz (25, 26)
b) lorsque le sac à gaz (25, 26) est à l'état gonflé, les bords latéraux (27a, 27b) de la bande de séparation (27, 28, 30, 32) présentent au moins en partie un tracé qui diffère d'une droite et/ou s'étendent dans des directions différentes, et
c) les extrémités étroites (33, 34) de la bande de séparation (27, 28, 30, 32) s'étendent à une certaine distance du sac à gaz (25, 26),
caractérisé en ce
que dans le cas où le sac à gaz (25, 26) est disposé dans une portière (23) du véhicule, la bande de séparation (27, 28, 30, 32) s'étend dans la direction longitudinale du véhicule et que ses deux bords latéraux (27a, 27b) fixés au sac à gaz s'étendent dans des directions différentes de telle sorte que la dilatation du sac à gaz gonflé (25, 26) transversalement par rapport au plan de la portière entre les extrémités de la bande de séparation (27, 28, 30, 32) est modifiée et de ce fait est adaptée, dans la direction longitudinale du véhicule, à l'espace qui est disponible pour le sac à gaz (25, 26) à côté d'un siège (22) du véhicule.

2. Sac à gaz selon la revendication 1, caractérisé en ce que la bande de séparation s'étend avec une forme arquée au niveau de ses extrémités étroites (6, 7).

3. Sac à gaz selon la revendication 1 ou 2,
caractérisé en ce que les grands bords latéraux (8, 9) de la bande de séparation sont fixés d'une manière continue au sac à gaz.

4. Sac à gaz selon au moins l'une des revendications précédentes, caractérisé en ce que la bande de séparation divise le sac à gaz en deux chambres (10, 11) , dont la première (10) est raccordée au dispositif de remplissage, et que la bande de séparation (5a, 5b, 5c) s'étend avec une forme arquée au niveau de ses extrémités étroites (6, 7) en direction de la seconde chambre (11).

5. Sac à gaz selon au moins l'une des revendications précédentes, caractérisé en ce que les grands bords latéraux, qui sont fixés au sac à gaz, de la bande de séparation (12) ont globalement une forme incurvée.

6. Sac à gaz selon au moins l'une des revendications précédentes, caractérisé en ce que dans le cas de la disposition de plus de deux chambres, il est prévu, pour réaliser la subdivision entre ces chambres, une bande de séparation (16, 17) ou plusieurs bandes de séparation (37, 38).

7. Sac à gaz selon au moins l'une des revendications précédentes, caractérisé en ce que les grands côtés latéraux, fixés au sac à gaz, de la bande de séparation (13) sont agencés en forme de V et le sac à gaz est subdivisé par la bande de séparation en trois chambres (14, 15, 16).

8. Sac à gaz selon au moins l'une des revendications précédentes, caractérisé en ce que les grands bords latéraux, fixés au sac à gaz, de la bande de séparation (17) s'étendent en zigzag.

9. Sac à gaz selon au moins l'une des revendications précédentes, caractérisé en ce que la bande de séparation (27) possède une forme trapézoïdale et que les côtés non parallèles (27a, 27b) du trapèze sont reliés au sac à gaz.

10. Sac à gaz selon au moins l'une des revendications précédentes, caractérisé en ce que la bande de séparation (28, 30, 32) possède la forme d'un trapèze double, les deux trapèzes possédant l'un des côtés parallèles en tant que côté commun (29, 31) et que les côtés non parallèles du trapèze sont reliés au sac à gaz.

11. Sac à gaz selon au moins l'une des revendications précédentes, caractérisé en ce que le sac à gaz est constitué respectivement par une partie inférieure (1) et une partie supérieure (2) en forme de plaques, entre lesquelles la bande de séparation (5a, 5b, 5, 1, 13, 17) s'étend et auxquelles elle est fixée.

12. Sac à gaz selon au moins l'une des revendications précédentes, caractérisé en ce que la bande de séparation (32) comporte des parties (35, 36) ayant des formes différentes et/ou que les bandes de séparation (37, 38) possèdent des formes différentes au niveau de chambres différentes.
